# EUROPÄISCHE PATENTSCHRIFT

(11) **EP 0 649 240 B1**
(45) Veröffentlichungstag und Bekanntmachung des Hinweises auf die Patenterteilung: **03.04.2002**
(21) Anmeldenummer: 94202923.2
(22) Anmeldetag: 10.10.1994
(51) Int. Cl.: H04M 3/42

(54) **Kommunikationssystem**
Communication system
Système de communication

(30) Priorität: 16.10.1993 DE 4335396
(43) Veröffentlichungstag der Anmeldung: 19.04.1995
(73) Patentinhaber: Philips Corporate Intellectual Property GmbH, 52064 Aachen (DE); Koninklijke Philips Electronics N.V., 5621 BA Eindhoven (NL)
(72) Erfinder: Abramowski, Stephan Dr.,, D-20097 Hamburg (DE); Fischer, Jochen, D-20097 Hamburg (DE); Kehne, Axel, D-20097 Hamburg (DE); Gappisch, Holger, D-20097 Hamburg (DE); Elixmann, Martin Dr., D-20097 Hamburg (DE); Klabunde, Karin, D-20097 Hamburg (DE); Konrads, Ursula Dr., D-20097 Hamburg (DE)
(74) Vertreter: Volmer, Georg, Dipl.-Ing.

(56) Entgegenhaltungen:
- EP-A- 0 450 610
- WO-A-92/00642
- WO-A-93/16543

## Beschreibung

Die Erfindung bezieht sich auf ein Kommunikationssystem mit einem wenigstens mit einem Endgerät gekoppelten Nachrichtennetz.

Aus der WO 92/11724 oder dem Themenheft der Zeitschrift net - Zeitschrift für angewandte Telekommunikation, net special 12, März 1993, Seiten 8 bis 18, ist ein Kommunikationssystem bekannt, das ein Nachrichtennetz (switched telephone network, service control point) mit mehreren Vermittlungsstellen und damit gekoppelte Endgeräte enthält. Bestimmte im Nachrichtennetz enthaltene Vermittlungsstellen dienen einerseits dazu Vermittlungsfunktionen mit verschiedenen Endgeräten (z.B. Fernsprechverkehr) oder weiteren Vermittlungsstellen und andererseits eine Vermittlung mit einem zur Bearbeitung von Diensten vorgesehenem Netz (Overlay-Netz) durchzuführen. Ein Dienst der Deutschen Bundespost Telekom ist beispielsweise der private Informationsdienst Tele-Info-Service.

Wird von einem Teilnehmer eine spezielle Dienstnummer (z.B. 0190...) gewählt, so erkennt dies eine Vermittlungsstelle (service switching point) und stellt eine entsprechende Verbindung mit diesem zur Bearbeitung von Diensten vorgesehenem Netz her. Wenigstens bestimmte Vermittlungsstellen führen also außer ihrer normalen Vermittlung von Fernsprechverbindungen auch eine Anrufbearbeitung und Durchschaltung zum Dienste bearbeitendem Netz durch. Hierzu ist eine solche Vermittlungsstelle gegenüber einer nur für den Fernsprechverkehr vorgesehenen Vermittlungsstelle erweitert worden und somit auch das Nachrichtennetz verändert worden.

Die WO 92/00642 beschreibt ein Kommunikationssystem mit einem mit wenigstens einem Endgerät gekoppelten Nachrichtennetz, wobei eine Vermittlungsstelle dieses Nachrichtennetzes mit einer Dienstvorrichtung gekoppelt ist. Ein Endgerät wird durch Wall einer bestimmten Rufnummer mit der Dienstvorrichtung verbunden, die daraufhin einen der gewällten Rufnummer entsprechenden Dienst zur Verfügung stellt. Für bestimmte Dienste (z.B. Anrufweiterschaltung) greift die Dienstvorrichtung auf die Funktionalität der Vermittlungsstelle des Nachrichtennetzes zurück.

Der Erfindung liegt die Aufgabe zugrunde, ein Kommunikationssystem zu schaffen, bei dem ein Dienst ohne Veränderung des Nachrichtennetzes zur Verfügung gestellt wird.

Die Aufgabe wird durch ein Kommunikationssystem der eingangs genannten Art dadurch gelöst,
daß das Nachrichtennetz mit einer Dienstvorrichtung gekoppelt ist, die eine Vermittlungsvorrichtung, eine Steueranordnung und eine wenigstens ein Dienstlogikprogramm enthaltene Datenbank enthält,
daß ein Endgerät zur Aktivierung eines ersten und zweiten, zur Dienstvorrichtung gesendeten Parameters vorgesehen ist und
daß die Steueranordnung in Abhängigkeit von dem ersten Parameter zur Entnahme eines Dienstlogikprogramms aus der Datenbank und zur Steuerung der Vermittlungsvorrichtung in Abhängigkeit von dem zweiten Parameter und dem aufgerufenen Dienstlogikprogramm vorgesehen ist.

Bei dem erfindungsgemäßen Kommunikationssystem ist mit dem Nachrichtennetz eine Dienstvorrichtung gekoppelt, die wenigstens einen Dienst zur Verfügung stellt. Die Dienstvorrichtung enthält eine Steueranordnung, welche empfangene Parameter auswertet. Die Parameter können beispielsweise von einem Endgerät durch Eingabe von Wählziffern erzeugt werden und zur Dienstvorrichtung gesendet werden. Hierbei muß zuerst von dem Teilnehmer die Rufnummer der Dienstvorrichtung und anschließend weitere Wählziffern eingegeben werden. Die sich an die Rufnummer der Dienstvorrichtung anschließenden Ziffern werden als Parameter von der Steueranordnung interpretiert. Eine erste Gruppe von Wählziffern bildet dabei einen ersten Parameter, der einen bestimmten Dienst kennzeichnet. Die Steueranordnung entnimmt dabei aus einer in der Dienstvorrichtung befindlichen Datenbank das für die Steuerung des Dienstes erforderliche Dienstlogikprogramm.

In der Dienstvorrichtung ist ferner eine Vermittlungsvorrichtung vorhanden, die von der Steueranordnung in Abhängigkeit von einem zweiten Parameter, der von dem Endgerät ausgesendet worden ist, gesteuert wird. Der zweite Parameter kann beispielsweise aus einer Gruppe von Wählziffern bestehen, die sich an die Gruppe von Wählziffern für den ersten Parameter anschließen. Der zweite Parameter wird von der Steueranordnung mittels des Dienstlogikprogramms ausgewertet und dann ein entsprechender Steuerbefehl an die Vermittlungsvorrichtung geleitet.

Beispielsweise kann die Dienstvorrichtung eine Verbindung zwischen dem den Dienst aufrufenden Endgerät und einem anderen, aufzurufenden Endgerät herstellen. Hierbei wertet die Steueranordnung die empfangenen Wählziffern aus und wählt das aufzurufende Endgerät an. Sobald die Verbindung aufgebaut ist, wird die Verbindung von der Vermittlungsvorrichtung zum aufrufenden Endgerät hergestellt.

Ein Endgerät kann z.B. ein Fernsprechgerät, ein PersonalComputer oder eine Workstation sein. Von einem solchen Endgerät werden nicht nur numerische Ziffern ausgesendet, sondern auch Buchstaben und Sonderzeichen.

Ist das Nachrichtennetz ein dienstintegriertes digitales Netz (ISDN), können auch von einer Vermittlungsstelle die Parameter an die Dienstvorrichtung gesendet werden, wenn vom Endgerät eine Aktivierung erfolgt (z.B. Abheben des Hörers). Die Vermittlungsstelle stellt dabei zuerst eine Verbindung mit der Dienstvorrichtung her und sendet anschließend die Parameter.

Durch die Kopplung der Dienstvorrichtung an das Nachrichtennetz kann ein Dienst zur Verfügung gestellt werden, ohne daß das Nachrichtennetz verändert werden muß.

Die Steueranordnung ist also zur Entnahme des mit dem ersten Parameter adressierten Dienstlogikprogramms, zur Interpretation des Dienstlogikprogrammes und zur Erzeugung eines Steuerbefehls für die Vermittlungsvorrichtung in Abhängigkeit vom zweiten Parameter vorgesehen. Die Vermittlungsvorrichtung ist zur Weiterleitung der empfangenen ersten und zweiten Parameter an die Steueranordnung und nach Empfang eines Steuerbefehls zur Durchführung einer Vermittlungsfunktion vorgesehen.

Um neue Dienste zu entwerfen und zu testen, ist eine Dienstentwicklungsanordnung in der Dienstvorrichtung vorgesehen. Nach der Entwicklung eines Dienstlogikprogrammes, wird dieses Dienstlogikprogramm der Datenbank zur Speicherung zugeführt. Die Steueranordnung kann dann ein solches Dienstlogikprogramm aus der Datenbank nach dessen Aufruf durch einen Teilnehmer über ein Endgerät entnehmen.

Des weiteren enthält die Dienstvorrichtung eine Sprachverarbeitungsvorrichtung, die
- wenigstens in Abhängigkeit vom zweiten Parameter einen Steuerbefehl von der Steueranordnung erhält,
- die zur Spracherkennung einer über die Vermittlungsvorrichtung zugeführten Nachricht,
- zur Weiterleitung der erkannten Nachricht als dritter Parameter an die Steueranordnung und
- zur Erzeugung einer von der Vermittlungsvorrichtung weitergeleiteten Sprachansage vorgesehen ist.

Die Sprachverarbeitungsvorrichtung leitet beispielsweise einem Endgerät Sprachansagen zu oder führt eine Spracherkennung von Sprachansagen eines Teilnehmers durch, die von dem Endgerät über das Nachrichtennetz der Dienstvorrichtung geliefert worden sind. Die erkannte Sprachansage wird als dritter Parameter der Steueranordnung zugeführt, die daraufhin in Abhängigkeit vom dritten Parameter einen Steuerbefehl für die Sprachvorrichtung und/oder die Vermittlungsvorrichtung erzeugt.

Die Erfindung bezieht sich auch auf eine Dienstvorrichtung, die über ein Nachrichtennetz mit wenigstens einem Endgerät gekoppelt ist und die eine Vermittlungsvorrichtung, eine wenigstens ein Dienstlogikprogramm enthaltene Datenbank und eine Steueranordnung enthält, welche in Abhängigkeit von einem ersten, von einem Endgerät gesendeten Parameter zur Entnahme eines Dienstlogikprogramms aus der Datenbank und zur Steuerung der Vermittlungsvorrichtung in Abhängigkeit von einem zweiten, von dem Endgerät gesendeten Parameter und dem aufgerufenen Dienstlogikprogramm vorgesehen ist.

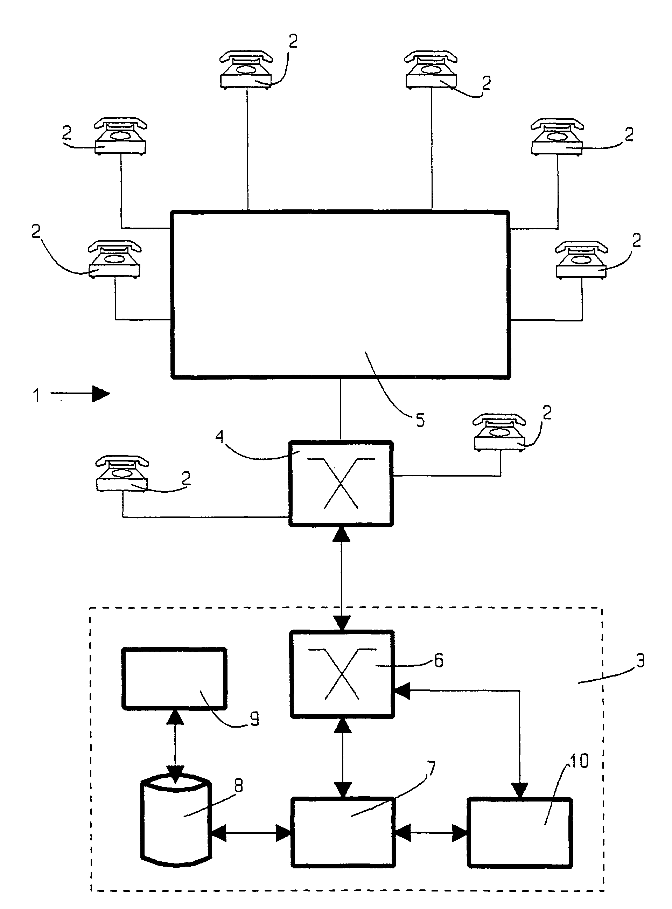

Ein Ausführungsbeispiel der Erfindung wird nachstehend anhand der Figur erläutert, die ein Kommunikationssystem zeigt.

Das in der Figur dargestellte Kommunikationssystem enthält ein Nachrichtennetz 1, mehrere Endgeräte 2 und eine Dienstvorrichtung 3. In der Figur ist exemplarisch eine Vermittlungsstelle 4 des Nachrichtennetzes 1 gezeigt, mit der die Dienstvorrichtung 3 gekoppelt ist. Der Rest des als Block dargestellten Nachrichtennetzes 1 ist mit dem Bezugszeichen 5 bezeichnet.

Die Dienstvorrichtung 3 enthält eine Vermittlungsvorrichtung 6, eine Steueranordnung 7, eine Datenbank 8, eine Dienstentwicklungsanordnung 9 und eine Sprachverarbeitungsvorrichtung 10. Die Vermittlungsvorrichtung 6 der Dienstvorrichtung 3 ist mit der Vermittlungsstelle 4 des Nachrichtennetzes 1 gekoppelt. Die Vermittlungsvorrichtung 6 ist weiterhin mit der Sprachverarbeitungsvorrichtung 10 und der Steueranordnung 7 verbunden. Es besteht auch eine Verbindung zwischen der Steueranordnung 7 und der Sprachverarbeitungsvorrichtung 10. An die Steueranordnung 7 ist noch eine Datenbank angeschlossen, in der Dienstlogikprogramme abgelegt sind.

Soll eine Verbindung von einem Endgerät 2 mit der Dienstvorrichtung 3 aufgebaut werden, so muß von dem Endgerät 2 aus, die Dienstvorrichtung zuvor angewählt werden. Beispielsweise wird eine Verbindung zur Vermittlungsstelle 4 durch Eingeben der Vorwahlziffern (z.B. "0123") in das Endgerät und die Verbindung zur Dienstvorrichtung 3 durch Eingeben weiterer Wählziffern (z.B. "67") durchgeschaltet. Damit der Benutzer einen Dienst in der Dienstvorrichtung 3 aufrufen kann, müssen weitere Wählziffern (z.B. "999") in das Endgerät 2 eingegeben werden. Diese Wählziffern bilden einen ersten Parameter. Die Vermittlungsvorrichtung 6 leitet die empfangenen Zeichen an die Steueranordnung 7 weiter, die aus den Zeichen den ersten Parameter bestimmt. Anschließend entnimmt die Steueranordnung 7 das mit dem ersten Parameter adressierte Dienstlogikprogramm aus der Datenbank 8. Weitere von der Vermittlungsvorrichtung 6 empfangene und an die Steueranordnung 7 weitergegebene Zeichen (z.B. Wählziffern "12") werden von dieser als zweiter Parameter identifiziert. Der zweite Parameter wird als Eingabe für das Dienstlogikprogramm interpretiert. Die Steueranordnung gibt dann in Abhängigkeit vom in dem Dienstlogikprogramm verarbeiteten zweiten Parameter einen Steuerbefehl an die Vermittlungsvorrichtung 6 und/oder an die Sprachverarbeitungsvorrichtung 10. Beispielsweise soll die Vermittlungsvorrichtung 6 nach Empfang des Steuerbefehls eine Verbindung zu einem anderen Endgerät 2 herstellen. Die Sprachverarbeitungsvorrichtung 10 kann beispielsweise nach Empfang des Steuerbefehls eine Sprachansage erzeugen, die über die Vermittlungsvorrichtung 6 an den den Dienst aufrufenden Teilnehmer weitergeleitet wird, oder Sprachansagen, die von dem aufrufenden Teilnehmer erwartet werden, erkennen und als dritten Parameter für das Dienstlogikprogramm der Steueranordnung 7 übergeben. Dieser dritte Parameter wird dann von dem Dienstlogikprogramm verarbeitet und daraufhin ein weiterer Steuerbefehl erzeugt.

Mit der Datenbank 8 ist noch die Dienstentwicklungsanordnung 9 verbunden, mit der ein neuer Dienst entwickelt, getestet und geändert werden kann. Neue oder geänderte Dienste werden nach der Bearbeitung von der Dienstentwicklungsanordnung 9 zur Datenbank 8 gegeben, die den neuen oder geänderten Dienst abspeichert.

Zum weiteren Verständnis der Erfindung werden zwei Beispiele für Dienstlogikprogramme im folgenden aufgeführt.

### Beispiel 1:

Sind die Ziffern "01800" gewählt worden?
- J:: Entnahme des Dienstes 1 aus der Datenbank; Sind weiter die Ziffern "0225" gewählt worden?
N: Steuerbefehl an die Sprachverarbeitungsvorrichtung 10: Sprachansage "Nummer ist nicht interpretierbar";
J: 01.11.1993 ≤ Datum ≤ 19.11.1993 und 8.00 Uhr ≤ Tageszeit ≤ 19.00 Uhr?
J: Steuerbefehl an die Vermittlungsvorrichtung 6: Verbinde mit "040 34870";
N: Welcher Wochentag liegt vor? Samstag und Sonntag:
Steuerbefehl an die Sprachverarbeitungsvorrichtung 10: Sprachansage "Büro ist geschlossen";
Montag oder Freitag:
Welche Tageszeit liegt vor?
7.00 Uhr bis 16.30 Uhr:
Steuerbefehl an die Vermittlungsvorrichtung 6: Verbinde mit "0241 155254";
16.31 Uhr bis 22.00 Uhr:
Steuerbefehl an die Vermittlungsvorrichtung 6: Verbinde mit "040 3279";
sonst:
Steuerbefehl an die Sprachverarbeitungsvorrichtung 10: Sprachansage "Büro ist geschlossen";

Wenn die Steueranordnung 7 die Ziffern "01800" (erster Parameter) von der Vermittlungsvorrichtung 6 empfangen hat, wird der Dienst 1 aus der Datenbank 8 entnommen, der abhängig von Datum, Tageszeit und eventuell dem Wochentag Verbindungen aufbaut oder Meldungen abgibt. Dann wird von der Steueranordnung 7 geprüft, welche Ziffern als nächstes von dem Teilnehmer des Endgerätes eingegeben worden sind. Sind nicht die Ziffern "0225" (zweiter Parameter) eingeben worden, wird von der Steueranordnung 7 ein Steuerbefehl an die Sprachverarbeitungsvorrichtung 10 gesandt, daß diese die Sprachansage "Nummer ist nicht interpretierbar" erzeugen soll. Die Vermittlungsvorrichtung 6 leitet diese Sprachansage an das Nachrichtennetz 1 weiter. Im anderen Fall wird überprüft, welches Datum, welche Tageszeit und eventuell welcher Wochentag vorliegt.

Wird der Anruf von dem Endgerät 2 an die Dienstvorrichtung 3 zwischen dem 1.11. und dem 19.11.1993 zwischen 8.00 Uhr und 19.00 Uhr durchgeführt, gibt die Steueranordnung 7 einen Steuerbefehl an die Vermittlungsvorrichtung 6, daß mit dem Endgerät 2 mit der Rufnummer "040 34870" eine Verbindung hergestellt werden soll. Sonst wird überprüft, welcher Wochentag vorliegt. An einem Samstag und Sonntag wird an die Sprachverarbeitungsvorrichtung 10 der Steuerbefehl gesandt, daß die Sprachansage "Büro ist geschlossen" erzeugt werden soll. Wenn der Anruf zur Dienstvorrichtung 3 an einem Montag oder Freitag erfolgt, wird die Tageszeit abgefragt. Zwischen 7.00 Uhr und 16.30 Uhr wird von der Steueranordnung 7 ein Steuerbefehl an die Vermittlungsvorrichtung 6 gesendet, daß mit dem Endgerät mit der Rufnummer "0241 155254" eine Verbindung hergestellt werden soll. Ist der Anruf an die Dienstvorrichtung 3 zwischen 16.31 Uhr und 22.00 Uhr erfolgt, wird von der Vermittlungsvorrichtung 6 versucht, eine Verbindung mit dem Endgerät mit der Rufnummer "040 3279" aufzubauen. In allen anderen Fällen wird ein Steuerbefehl von der Steueranordnung 7 an die Sprachverarbeitungsvorrichtung 10 gegeben. Durch den Steuerbefehl wird die Sprachverarbeitungsvorrichtung 10 veranlaßt die Sprachansage "Büro ist geschlossen" auszugeben.

### Beispiel 2:

Sind die Ziffern "60099" gewählt worden?
- J:: Entnahme des Dienstes 2 aus der Datenbank; Welche weiteren Ziffern sind gewählt worden?
Ziffern "11":
   Steuerbefehl an die Vermittlungsvorrichtung 6:
   Verbinde mit "0221 15632";
Ziffern "12":
   Steuerbefehl an die Vermittlungsvorrichtung 6:
   Verbinde mit "02251 98732";
Ziffern "13":
   Steuerbefehl an die Vermittlungsvorrichtung 6:
   Verbinde mit "080 171240";
sonst:
Steuerbefehl an die Sprachverarbeitungsvorrichtung 10: Sprachansage "Nummer ist nicht interpretierbar";

Nach Empfang der Ziffern "60099" (erster Parameter) von der Vermittlungsvorrichtung 6, entnimmt die Steueranordnung 7 den Dienst 2 aus der Datenbank 8, der abhängig von den Ziffern des zweiten Parameters einen Steuerbefehl an die Vermittlungsvorrichtung 6 sendet, eine Verbindung mit einem bestimmten Endgerät herzustellen. Besteht der zweite Parameter aus den Ziffern "11", wird eine Verbindung mit dem Endgerät mit der Rufnummer "0221 15632" hergestellt. Ferner wird bei Wahl der Ziffern "12" (zweiter Parameter) eine Verbindung mit dem Endgerät mit der Rufnummer "02251 98732" und bei Wahl der Ziffern "13" eine Verbindung mit dem Endgerät mit der Rufnummer "080 0171240" aufgebaut. In allen anderen Fällen gibt die Sprachverarbeitungsvorrichtung, nach Empfang eines Steuerbefehls von der Steueranordnung 7, die Sprachansage "Nummer ist nicht interpretierbar" aus.

## Patentansprüche

1. Kommunikationssystem mit einem wenigstens mit einem Endgerät (2) gekoppelten Nachrichtennetz (1),
**dadurch gekennzeichnet,**
**daß** das Nachrichtennetz (1) mit einer Dienstvorrichtung (3) gekoppelt ist, die eine Vermittlungsvorrichtung (6), eine Steueranordnung (7) und eine wenigstens ein Dienstlogikprogramm enthaltene Datenbank (8) enthält, daß ein Endgerät (2) zur Aktivierung eines ersten und zweiten, zur Dienstvorrichtung (3) gesendeten Parameters vorgesehen ist und
**daß** die Steueranordnung (7) in Abhängigkeit von dem ersten Parameter zur Entnahme eines Dienstlogikprogramms aus der Datenbank (8) und zur Steuerung der Vermittlungsvorrichtung (6) in Abhängigkeit von dem zweiten Parameter und dem aufgerufenen Dienstlogikprogramm vorgesehen ist.

2. Kommunikationssystem nach Anspruch 1,
**dadurch gekennzeichnet,**
**daß** die Steueranordnung (7) zur Entnahme des mit dem ersten Parameter adressierten Dienstlogikprogramms, zur Interpretation des Dienstlogikprogrammes und zur Erzeugung eines Steuerbefehls für die Vermittlungsvorrichtung (6) in Abhängigkeit vom zweiten Parameter vorgesehen ist und
**daß** die Vermittlungsvorrichtung (6) zur Weiterleitung der empfangenen ersten und zweiten Parameter an die Steueranordnung (7) und nach Empfang eines Steuerbefehls zur Durchführung einer Vermittlungsfunktion vorgesehen ist.

3. Kommunikationssystem nach Anspruch 1 oder 2,
**dadurch gekennzeichnet,**
**daß** die Dienstvorrichtung (3) eine Dienstentwicklungsanordnung (9) enthält, die zur Entwicklung eines Dienstlogikprogrammes und zur Zuführung der Dienstlogikprogramme an die Datenbank (8) vorgesehen ist.

4. Kommunikationssystem nach Anspruch 1, 2 oder 3,
**dadurch gekennzeichnet,**
**daß** die Dienstvorrichtung (3) eine Sprachverarbeitungsvorrichtung (10) enthält, die
- wenigstens in Abhängigkeit vom zweiten Parameter einen Steuerbefehl von der Steueranordnung (7) erhält,
- die zur Spracherkennung einer über die Vermittlungsvorrichtung (6) zugeführten Nachricht,
- zur Weiterleitung der erkannten Nachricht als dritter Parameter an die Steueranordnung (7) und
- zur Erzeugung einer von der Vermittlungsvorrichtung (6) weitergeleiteten Sprachansage vorgesehen ist.

5. Kommunikationssystem nach Anspruch 4,
**dadurch gekennzeichnet,**
**daß** die Steueranordnung (7) zum Empfang des dritten Parameters von der Sprachverarbeitungsvorrichtung (10) und zur Erzeugung eines Steuerbefehls für die Vermittlungsvorrichtung (6) und/oder für die Sprachverarbeitungsvorrichtung (10) in Abhängigkeit vom dritten Parameter vorgesehen ist.

6. Dienstvorrichtung (3), die über ein Nachrichtennetz (1) mit wenigstens einem Endgerät (2) gekoppelt ist und die eine Vermittlungsvorrichtung (6), eine wenigstens ein Dienstlogikprogramm enthaltene Datenbank (8) und eine Steueranordnung (7) enthält, welche in Abhängigkeit von einem ersten, von einem Endgerät (2) gesendeten Parameter zur Entnahme eines Dienstlogikprogramms aus der Datenbank (8) und zur Steuerung der Vermittlungsvorrichtung (6) in Abhängigkeit von einem zweiten, von dem Endgerät (2) gesendeten Parameter und dem aufgerufenen Dienstlogikprogramm vorgesehen ist.

## Claims

1. A communication system comprising a communications network (1) coupled at least to a terminal unit (2), **characterized in that** the communications network ( 1 ) is coupled to a service device (3) which comprises a switching centre (6), a controller (7) and a data bank (8) which contains at least a service logical program, **in that** a terminal unit (2) is provided for generating a first and a second parameter sent to the service device (3), and **in that** the controller (7) is provided for extracting a service logical program from the data bank (8) in response to the first parameter and for controlling the switching centre (6) in response to the second parameter and the called service logical program.

2. A communication system as claimed in Claim 1, **characterized in that** the controller (7) is provided for extracting the service logical program addressed by a first parameter for interpreting the service logical program and for generating a control instruction for the switching centre (6) in response to the second parameter and **in that** the switching centre (6) is used for conveying the received first and second parameters to the controller (7) and, in response to a control instruction, for carrying out a switching function.

3. A communication system as claimed in Claim 1 or 2, **characterized in that** the service device (3) contains a service development arrangement (9) which is provided for developing a service logical program and for feeding the service logical programs to the data bank (8).

4. A communication system as claimed in Claim 1, 2 or 3, **characterized in that** the service device (3) comprises a speech processor (10) which
- receives a control instruction from the controller (7) at least in response to the second parameter,
- is provided for speech recognition of a message supplied *via* the switching centre (6),
- is provided for conveying the recognized message as a third parameter to the controller (7), and
- is provided for producing a prompt conveyed by the switching centre (6).

5. A communication system as claimed in Claim 4, **characterized in that** the controller (7) is provided for receiving the third parameter from the speech processor (10) and for producing a control instruction for the switching centre (6) and/or for the speech processor (10) in dependence on the third parameter.

6. A service device (3) coupled *via* a communications network (1) to at least a terminal unit (2) and which comprises a switching center (6), a data bank (8) containing at least a service logical program and a controller (7), which controller is arranged for extracting a service logical program from the data bank (8) in response to a first parameter sent by a terminal unit (2) and for controlling the switching center (6) in response to a second parameter sent by the terminal unit (2) and in response to the called service logical program.

## Revendications

1. Système de communication avec un réseau de transmission (1) couplé à au moins un terminal (2),
**caractérisé en ce**
**que** le réseau de transmission (1) est couplé à un dispositif de service (3) qui contient un dispositif de commutation (6), un dispositif de commande (7) et une base de données (8) contenant au moins un programme logique de service,
**qu'**un terminal (2) est prévu pour l'activation de premier et deuxième paramètres transmis pour le dispositif de service (3), et
**que** le dispositif de commande (7) est prévu en fonction du premier paramètre pour le prélèvement d'un programme logique de service de la base de données (8) et pour la commande du dispositif de commutation (6) en fonction du deuxième paramètre et du programme logique de service appelé.

2. Système de communication selon la revendication 1,
**caractérisé en ce**
**que** le dispositif de commande (7) est prévu pour le prélèvement du programme logique de service adressé avec le premier paramètre, pour l'interprétation du programme logique de service et pour la production d'un ordre de commande pour le dispositif de commutation (6) en fonction du deuxième paramètre et que le dispositif de commutation (6) est prévu pour la transmission des premier et deuxième paramètres reçus au dispositif de commande (7) et, après réception d'un ordre de commande, pour l'exécution d'une fonction de commutation.

3. Système de communication selon l'une des revendications 1 ou 2,
**caractérisé en ce**
**que** le dispositif de service (3) contient un montage de développement de service (9) qui est prévu pour le développement d'un programme logique de service et pour l'amenée des programmes logiques de service à la base de données (8).

4. Système de communication selon l'une des revendications 1, 2 ou 3,
**caractérisé en ce**
**que** le dispositif de service (3) contient un dispositif de traitement de la parole (10) qui
- en fonction du deuxième paramètre, reçoit au moins du dispositif de commande (7) un ordre de commande;
- est prévu pour la reconnaissance de la parole d'une message amené par l'intermédiaire du dispositif de commutation (6);
- pour la transmission du message reconnu comme un troisième paramètre au dispositif de commande (7), et
- pour la production d'une annonce vocale transmise par le dispositif de commutation (6).

5. Système de communication selon la revendication 4,
**caractérisé en ce**
**que** le dispositif de commande (7) est prévu pour la réception du troisième paramètre du dispositif de traitement de la parole (10) et pour la production d'un ordre de commande pour le dispositif de commutation (6) et/ou pour le dispositif de traitement de la parole en fonction du troisième paramètre.

6. Dispositif de service (3) qui est couplé par l'intermédiaire d'un réseau de transmission (1) avec au moins un terminal (2) et qui contient un dispositif de commutation (6), une base de données (8) contenant au moins un programme logique de service et un dispositif de commande (7) qui est prévu, en fonction d'un premier paramètre transmis par un terminal (2) pour le prélèvement d'un programme logique de service à partir de la base de données (8) et pour la commande du dispositif de commutation (6) en fonction d'un deuxième paramètre transmis par le terminal (2) et du programme logique de service appelé.
